# EUROPEAN PATENT APPLICATION

(11) **EP 1 443 081 A1**
(43) Date of publication of application: **04.08.2004**
(21) Application number: 03250500.0
(22) Date of filing: 28.01.2003
(51) Int. Cl.: C08L 95/00, E01C 7/26

(54) **Road repair material**

(71) Applicant: Ready Mac UK Limited, Nr. Uckfield, East Sussex TN22 5RB (GB)
(72) Inventor: McIntosh, James Ready Mac UK Limited, East Sussex TN22 5RB (GB)
(74) Representative: Nicholls, Michael John

(57) **Abstract**

A road repair material includes recycled stone from road planings, as part of a dry mix for combination with a binder at a location of use. The recycled stone may be in combination with reinforcing fibres and/or with freshly quarried stone.

The dry mix is then mixed with a binder, preferably a cold curing aqueous bitumen emulsion and poured onto a roadway or pathway to provide a quick setting repair.

## Description

The present invention relates to a repair material for roadways or pathways comprising aggregate and a resin for binding the aggregate to provide a stable road surface when the material has been applied to a damaged area, for example pot hole.

From GB-A-2315274 it is known to provide a road repair material consisting of aggregate and reinforcing fibres, with a thermoplastic resin which can be heated to soften the resin to allow the material to be poured at a damaged area of road for setting and being able to carry traffic soon after.

It is also disclosed in GB-A-1326006 that aggregate can be bound with a transparent synthetic resin which cures to bind the aggregate, for the manufacture of molded decorative material.

One aspect of the present invention provides a road repair material comprising a mixture of recycled road planings with reinforcing fibres in a dry mix. A binder material, for example a cold bitumen emulsion material, may then be applied at a location of use, in order to bind the road planings and the fibres together for stabilising the material when repairing a road.

The dry mix may optionally include fresh quarried stone mixed with the recycled road planings. One particularly convenient mix is one employing a 50% fresh quarried stone and 50% recycled road planings composition. Storing such a mixture of aggregates dry allows for safe and convenient transport of the material to a location of use where the appropriate binder can be added in order to set rapidly and to stabilise the repair sufficiently to allow traffic over it after only a few hours.

The first aspect of the present invention provides an economical way of making available a road repair material, without the need for so much fresh quarried stone with the concomitant requirement for payment of quarry tax on the stone reduced.

A second aspect of the present invention provides a method of repairing a roadway or pathway comprising taking the road repair material of the first aspect of this invention in dry form, transporting it to a location of use, there mixing it with a binder and agitating the resulting mixture to spread the binder over the surfaces of the recycled road planings in the repair material, and then pouring the material to allow it to set to form a repair on a roadway or pathway.

Repairing roadways these days requires the removal of the trafficking surface in order to allow for replacement with fresh trafficking material, while maintaining the level of the previous road surface unaltered so that other fitments such as drains and kerbs are still able to be maintained at the same level despite the application of a new trafficking surface. This avoidance of raising the level of the road is particularly important in road areas under bridges where the clearance between the road surface and the bridge must be well signed up and cannot be reduced by virtue of a repair carried out. The result of planing away mechanically the trafficking surface of the road is that there is a recycled material available comprising stone aggregate and binder which can then be chopped or otherwise broken up and preferably graded in particle size to provide an aggregate substitute which can be reused with an appropriate setting binder composition.

It is particularly preferable to use a cold bitumen emulsion binder according to British Standard BS434 with the method of this invention as this material does not require the input of heat to achieve setting or softening, and hence leads to a cheaper process than the customary heating of a hot bitumen or a thermoplastic resin to soften it for binding purposes. Furthermore, heating a resin to soften it gives off unpleasant fumes which may be environmentally unacceptable and may involve a health hazard to the operatives carrying out the road repair work. Such fumes are not encountered with a cold curing binder material such as an aqueous bitumen emulsion.

When the road repair material uses a mixture of recycled road planings together with freshly quarried stone, an aggregate of more closely controlled grade is provided.

When reinforcing fibres are added these are preferably glass fibres. However, any other suitable fibrous material could be used for the reinforcement of the aggregate/binder material eventually provided when mixed at the location of use. The fibres will normally be incorporated in the dry mix so that the only subsequent mixing operation is that of applying the binder to the otherwise complete dry mix.

Conveniently the dry mix and the binder may be together introduced into the mixing chamber of a portable road repair apparatus to be agitated and allow thorough coating of the binder material over the aggregate and fibres so that the quantity of resin material needed to bind a particular weight of aggregate may be reduced by spreading it finely over the surfaces of the aggregate. One suitable apparatus for achieving this mixing on site and for dispensing the road repair mixture to provide a new top coat for a roadway or for filling a pot hole is described in GB-A-2,371,999.

Traditionally, the repair of potholes in a road surface requires cutting around the pothole to provide a sharp edge to the aperture to be filled. For example, where there are several potholes in a limited area of a road way, which often happens in the case of the Macadam trafficking surface on a concrete road bed, a rectangular cut out will be formed with a rotating diamond cutter to remove not only the material at the perimeters of the potholes but also material between adjacent potholes. It is then customary to fill the opening with a layer of hot Macadam which is spread using suitable spreading tools during the early stages of the cooling process, and then needs later compaction, for example with a heavy roller, towards the end of the cooling and setting of the Macadam binder.

By contrast, it has been found that potholes can be repaired using the material in accordance with the present invention by simply sweeping out loose material from the individual potholes, without the need to cut away the material around the edges, then filling the pothole by pouring in an initial application of the material in accordance with the invention using 1 0mm base grade size aggregate, and then finally pouring a top layer of the material in accordance with the present invention using a 3mm aggregate, and overlapping this final layer over the material around the edges of the pothole. With both of the applications of the road material according to the present invention the binder is preferably a cold curing aqueous bitumen emulsion. With this binder, the material has a self-levelling property such that there is no need for the compaction during setting, as the material will find its own level. Furthermore, if the repair is subjected to traffic early after the pouring process the action of the traffic driving over the repair tends to carry out whatever compaction is needed in order to finish the repair.

Using the above process, if there is any risk of the material being sufficiently moist as to adhere to the tires of the early traffic, it is advantageous to apply dry stone chippings over the top layer of the repair so that this will prevent adhesion of the tires and then any surplus stone can be swept away once the repair has set.

Traditionally local authorities in the United Kingdom will repair winter damage by applying a patch to the potholes during the winter months, and compacting the patch material to level it. Then, in the summer months, the thus repaired road will be resurfaced with a finishing surface. It has been found, however, that the road repair material in accordance with the present invention can readily be used in the winter, possibly with an additive to slow down the breaking or separation of the emulsion, and both the base coat and the top coat referred to above can be applied during the winter months so that the road can be fully repaired. If repairs are carried out in the summer, then the proportion of additive to prevent breaking can be reduced as the emulsion binder will set more quickly before the breaking can occur.

The reference to "roadway or pathway" in this specification is intended to denote any surface, such as airfield runways, aprons or taxiways, which use a construction similar to that used for roadways.

## Claims

1. A road repair material comprising recycled road planings and reinforcing fibres in a dry mix.

2. A road repair material according to claim 1, wherein the reinforcing fibres are glass fibres.

3. A road repair material comprising a mixture of fresh quarried stone and recycled road planings, in the form of a dry mix.

4. A road repair material according to claim 3, wherein there are equal quantities of the fresh quarried stone and the recycled road planings in said material.

5. A method of repairing a road or pathway comprising taking the road repair material according to any one of claims 1 to 4 in dry mix form, transporting it to a location of use, there mixing it with a binder and agitating the resulting mixture to spread the binder over the surfaces of the stone and/or aggregate in the repair material, and then pouring the material to allow it to set to form a repair on a roadway or pathway.

6. A method according to claim 5, wherein the binder is an aqueous bitumen emulsion which sets without the application of heat.
